# EUROPEAN PATENT SPECIFICATION

(11) **EP 3 842 300 B1**
(45) Date of publication and mention of the grant of the patent: **28.09.2022**
(21) Application number: 20204531.6
(22) Date of filing: 29.10.2020
(51) Int. Cl.: B60T 17/22

(54) **BRAKE ABNORMALITY DETERMINATION DEVICE, BRAKE STATE STORAGE DEVICE, ABNORMALITY DETERMINATION METHOD, ABNORMALITY DETERMINATION PROGRAM, AND BRAKE CONTROL DEVICE**
BREMSABNORMALITÄTSBESTIMMUNGSVORRICHTUNG, BREMSZUSTANDSSPEICHERVORRICHTUNG, ABNORMALITÄTSBESTIMMUNGSVERFAHREN, ABNORMALITÄTSBESTIMMUNGSPROGRAMM UND BREMSSTEUERVORRICHTUNG
DISPOSITIF DE DÉTERMINATION D'ANOMALIE DE FREIN, DISPOSITIF DE STOCKAGE D'ÉTAT DE FREIN, PROCÉDÉ DE DÉTERMINATION D'ANOMALIE, PROGRAMME DE DÉTERMINATION D'ANOMALIE ET DISPOSITIF DE COMMANDE DE FREIN

(30) Priority: 13.11.2019 JP 2019205382
(43) Date of publication of application: 30.06.2021
(73) Proprietor: Nabtesco Corporation, Tokyo 102-0093 (JP)
(72) Inventor: MAEDA, Wataru, Chiyoda-ku, Tokyo 102-0093 (JP); ATSUMO, Daichi, Chiyoda-ku, Tokyo 102-0093 (JP)
(74) Representative: Grünecker Patent- und Rechtsanwälte PartG mbB

(56) References cited:
- JP-A- 2016 147 555
- JP-A- 2019 026 205

## Description

The present invention relates to a brake abnormality determination device, a brake state storage device, an abnormality determination method, an abnormality determination program, and a brake control device.

Japanese Patent Application Publication No. 2016-147555 (hereinafter "the '555 publication") describes an air brake system used in railway vehicles. In the air brake system of the '555 publication, a target air pressure of the air supplied to the air brake system is set in accordance with operation by a driver of the railroad vehicle. By supplying the air with the set target air pressure to the air brake system, the air brake system is able to exert a braking force in accordance with operation by the driver of the railway vehicle. Further, in the air brake system of the '555 publication, the target air pressure is corrected depending on a deceleration of the railway vehicle. Document JP-2019-026205-A shows an abnormality detection unit, based on a measured brake cylinder pressure as compared to a brake instruction.

In such an air brake system as described in the '555 publication, the air pressure that corresponds to the driver's operation may not be supplied to the air brake system when deterioration or failure occurs in the air brake system itself or mechanism for supplying the air pressure to the air brake device. Since the air brake system described in the '555 publication corrects the target air pressure for a current running state of the railway vehicle, the corrected target air pressure does not always exactly correspond to the operation by the driver. Therefore, in the air brake device as in the '555 publication, it is difficult to determine whether a difference between the corrected target air pressure value and the target air pressure value corresponding to the driver's operation is a result of the correction and considered as normal or the difference is caused by deterioration or failure and considered as abnormal. This may lead to overlooking of signs of actual abnormalities or failures.

The present invention has been made in view of above and aims to discover an abnormality of an air brake system or an abnormality of a mechanism for supplying air pressure to the air brake system.

A brake control device according to one aspect of the disclosure includes an instruction value obtaining unit that obtains an instruction value of an air pressure supplied to an air brake device when braking a railway vehicle, a cylinder pressure value obtaining unit that obtains a brake cylinder pressure value calculated from the instruction value through a deceleration feedback control, and a determination unit that determines whether there is an abnormality of the air brake device based on the instruction value and the brake cylinder pressure value.

An abnormality determination method according to another aspect of the disclosure includes a step of obtaining an instruction value of an air pressure supplied to an air brake device when braking a railway vehicle, a step of obtaining a brake cylinder pressure value calculated from the instruction value through a deceleration feedback control, and a step of determining whether there is an abnormality of the air brake device based on the instruction value and the brake cylinder pressure value.

An abnormality determination program according to yet another aspect of the disclosure causing a computer to perform the steps of: obtaining an instruction value of an air pressure supplied to an air brake device when braking a railway vehicle, obtaining a cylinder pressure value calculated from the instruction value through a deceleration feedback control, and determining whether there is an abnormality of the air brake device based on the instruction value and the brake cylinder pressure value.

A brake control device according to still yet another aspect of the disclosure includes an instruction value obtaining unit that obtains an instruction value of an air pressure supplied to an air brake device when braking a railway vehicle, a cylinder pressure value obtaining unit that obtains a brake cylinder pressure value calculated from the instruction value through a deceleration feedback control, and a determination unit that determines whether there is an abnormality of the air brake device based on the instruction value and the brake cylinder pressure value.

In the above configuration, method, and program, not only the brake cylinder pressure value, which is the air pressure instructed to the air brake device, but also the change in the instruction value according to the operation of a driver can be reflected in the abnormality determination of the air brake device. Therefore, even in the configuration where the air pressure supplied to the air brake device is controlled according to a traveling state of the railway vehicle, it is possible to detect an abnormality of the air brake device or the mechanism for supplying the air pressure to the air brake device.

In the above brake control device, the determination unit may calculate a difference or ratio between the instruction value and the brake cylinder pressure value, and when a change speed of the difference or ratio is equal to or higher than a predetermined threshold value, the determination unit may determine that there is an abnormality of the air brake device.

When an abnormality occurs in the air brake device in the above configuration, a braking force of the air brake device may change suddenly. In this case, a control amount is increased to compensate for the sudden change of the braking force so that a difference or ratio between the instruction value and the brake cylinder pressure value changes suddenly. With the above configuration, it is possible to detect such an abnormality of the air brake device.

In the above brake control device, the determination unit may determine that there is an abnormality of the air brake device based on the instruction value and the brake cylinder pressure value that are obtained when a deceleration of the railway vehicle is within a predetermined reference range.

As long as a deceleration of the railway vehicle is within the reference range in the above configuration, it is considered that the change in the instruction value and the brake cylinder pressure value at that time are also modest. Accuracy of the abnormality determination can be improved by determining the abnormality based on the instruction value and the brake cylinder pressure value under such condition where the change in the instruction value and the brake cylinder pressure value are modest.

The above brake control device may further include a cylinder pressure value calculation unit that calculates the brake cylinder pressure value from the instruction value through the deceleration feedback control. The cylinder pressure value calculation unit may correct the instruction value within a predetermined range to calculate the brake cylinder pressure value.

In the above configuration, the correction amount for the instruction value does not become excessively large so that the magnitude relationship between the instruction value and the brake cylinder pressure value is unlikely to change sharply. In this way, the magnitude relationship between the instruction value and the brake cylinder pressure value is prevented from changing sharply and thereby it is possible to prevent an adverse effect on the determination of abnormality performed based on these values.

In the above brake control device, the instruction value obtaining unit may obtain the instruction value for a first air brake device, which is one of a plurality of the air brake devices, as a first instruction value, and the instruction value for a second air brake device other than the first air brake device among the plurality of air brake devices as a second instruction value. The cylinder pressure value obtaining unit may obtain the brake cylinder pressure value for the first air brake device as a first brake cylinder pressure value, and obtain the brake cylinder pressure value for the second air brake device as a second brake cylinder pressure value. Wherein the determination unit may determine an abnormality of the first air brake device based on the first instruction value, the first brake cylinder pressure value, the second instruction value, and the second brake cylinder pressure value.

In the above configuration, it is possible to determine the abnormality of the first air brake device by taking into consideration not only the state of the first air brake device which is the target of the abnormality determination but also the state of the second air brake device different from the first air brake device. Therefore, it is possible to more accurately determine the abnormality of the first air brake device.

The above brake control device may further include a cylinder pressure value calculation unit that calculates the brake cylinder pressure value from the instruction value through the deceleration feedback control. The cylinder pressure value calculation unit may correct at least one of the first instruction value and the second instruction value such that a difference between the first brake cylinder pressure value and the second brake cylinder pressure value becomes equal to or less than a prescribed value.

In the above configuration, the difference between the first brake cylinder pressure value and the second brake cylinder pressure value does not become excessively large beyond the prescribed value so that the first brake cylinder pressure value and the second brake cylinder pressure value do not change sharply. By preventing the sharp change in the first brake cylinder pressure value and the second brake cylinder pressure value, it is possible to prevent an adverse affect on the determination of the abnormality performed based on these values.

A brake control device according to another aspect of the disclosure includes an instruction value obtaining unit that obtains an instruction value of an air pressure supplied to an air brake device when braking a railway vehicle, a cylinder pressure value obtaining unit that obtains a brake cylinder pressure value calculated from the instruction value through a deceleration feedback control, and a storage unit storing the instruction value and the brake cylinder pressure value.

In the above configuration, the instruction value and the brake cylinder pressure value are stored in the storage unit. Therefore, based on the stored information, for example, a sign of an abnormality in the air brake device can be detected, which may be beneficial for maintenance or the like.

In the above brake control device, the instruction value obtaining unit may obtain the instruction value for a first air brake device, which is one of a plurality of the air brake devices, as a first instruction value, and the instruction value for a second air brake device other than the first air brake device among the plurality of air brake devices as a second instruction value. the instruction value obtaining unit may obtain the instruction value for a first air brake device, which is one of a plurality of the air brake devices, as a first instruction value, and the instruction value for a second air brake device other than the first air brake device among the plurality of air brake devices as a second instruction value. The determination unit may determine an abnormality of the first air brake device based on the first instruction value and the first brake cylinder pressure value, and determines an abnormality of the second air brake device based on the second instruction value and the second brake cylinder pressure value. The brake control device may further include a control unit that controls brake timings of the first air brake device and the second air brake device based on a result of the determination by the determination unit.

In the above configuration, since the brake timings of the first air brake device and the second air brake device are controlled in consideration of the abnormality of the first air brake device and the second air brake device, an appropriate braking force for the air brake devices in aggregate can be obtained.
Fig. 1 is a schematic view showing a configuration of a train having a plurality of vehicles coupled together.
Fig. 2 is a schematic view showing a configuration of a railway vehicle.
Fig. 3 is a flowchart showing an abnormality determination control performed by a control device.
Fig. 4 is a flowchart showing a brake control performed by the control device.
Fig. 5 is an explanatory drawing for the abnormality determination control of the train.
Fig. 6 is an explanatory drawing for the abnormality determination control of the train.

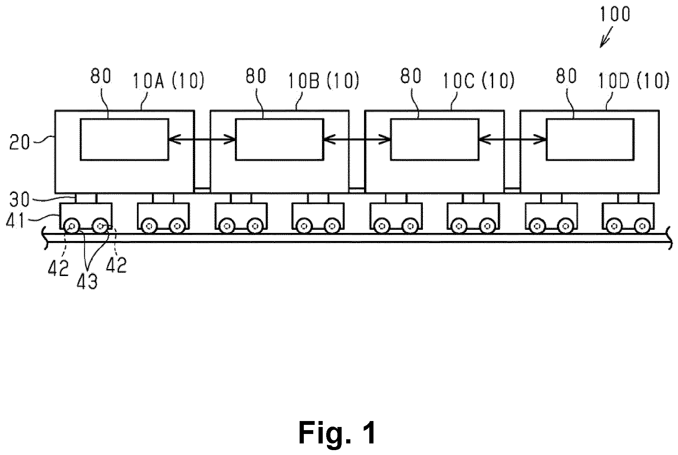

An embodiment of a brake abnormality determination device and a brake control device will be hereinafter described with reference to Figs. 1 to 6. The brake control device includes the brake abnormality determination device. First, the schematic configuration of a train 100, which is a railroad train, will be described.

As shown in Fig. 1, the train 100 includes four vehicles 10 coupled together in the front-and-back direction (the left-and-right direction in Fig. 1) of the train 100. The vehicles 10 are coupled such that each vehicle is coupled to adjacent vehicles 10 in the front-and-back direction, and includes a vehicle 10A, a vehicle 10B, a vehicle 10C and a vehicle 10D arranged in the stated order from the front side. Each vehicle 10 has substantially the same configuration and the following thus specifically describes only the vehicle 10A.

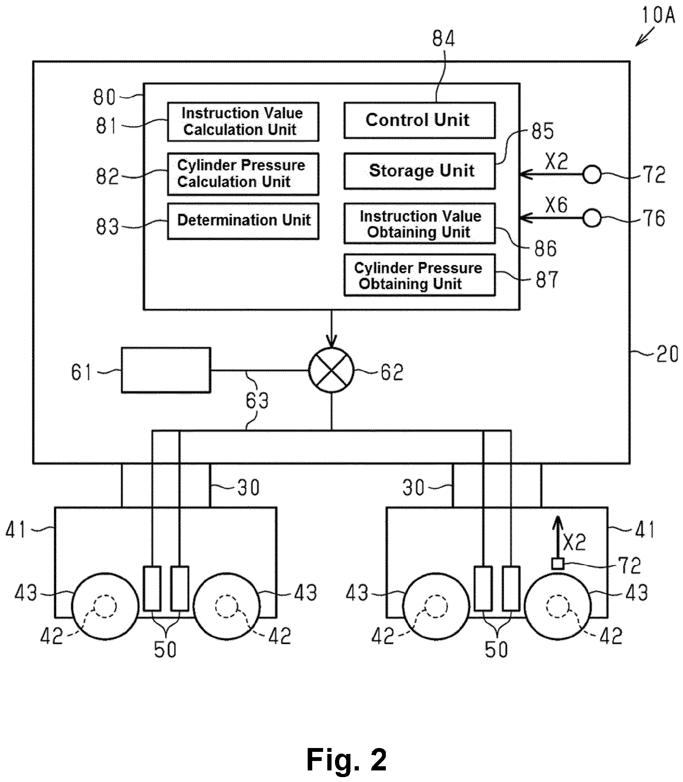

As shown in Fig. 2, the vehicle 10A includes two bogies 41 spaced away from each other in a front-and-back direction (the left-and-right direction in Fig. 2). Each bogie 41 has axles 42 attached thereto in a rotatable manner. The axles 42 extend in the width direction (the direction perpendicular to the plane of paper in Fig. 2). For each bogie 41, two axles 42 are provided and spaced away from each other in the front-and-back direction. On both ends of each axle 42, wheels 43 substantially shaped like a disk are fixed. Accordingly, each bogie 41 has four wheels 43 provided. In Fig. 1, the reference numerals are appended to only some of the bogies 41, axles 42 and wheels 43.

As shown in Fig. 2, air suspension 30, which utilizes elastic force provided by compressed air to absorb the vibration, is attached on the upper side of the bogies 41. A vehicle body 20 is attached on the upper side of the air suspension 30. The vehicle body 20 bounds an in-vehicle space. The vehicle body 20 is generally shaped like a rectangular parallelepiped box and has a long dimension in the front-and-back direction. In Fig. 1, the reference numerals are appended to some of the air suspensions 30 and vehicle bodies 20.

As shown in Fig. 2, an air brake device 50 is attached to each bogie 41. The air brake device 50 is designed to slow the rotation of the wheel 43. The air brake device 50 is of a tread brake type and configured to slow the rotation of the wheel 43 by bringing the brake shoe serving as a frictional member into contact with the wheel tread or the outer peripheral surface of the wheel 43. In this embodiment, the wheel 43 is a rotating body to be braked by the air brake device 50. The vehicle 10A has, in total, eight air brake devices 50 attached thereto, which correspond to the eight wheels 43. Fig. 2 only shows four wheels 43 and four air brake device 50, which are positioned on one of the sides in the width direction.

The vehicle 10A has an air supply source 61 attached thereto. The air supply source 61 is configured to supply air by pressure. The air supply source 61 has a supply channel 63 extending therefrom. The supply channel 63 branches into eight in the middle, and each branch channel is connected to one of the eight air brake devices 50. To the supply channel 63, a control valve 62 is attached that is configured to control the amount of the air distributed through the supply channel 63. The control valve 62 is disposed closer to the air supply source 61 than the origin of branches in the supply channel 63. This means that one control valve 62 is provided for the eight air brake devices 50. The air supply source 61 also has the air suspension 30 connected thereto through a channel, which is not shown. The air suspension 30 receives compressed air supplied from the air supply source 61.

The above-described bogies 41 have rotation sensors 72 attached thereto in order to detect an axial rotational speed, which represents the rotational speed of the axles 42. Each rotation sensor 72 is arranged in the vicinity of a corresponding one of the axles 42, and the vehicle 10A has, in total, four rotation sensors 72 provided. Fig. 2 shows only one of the rotational sensors 72 for simplicity.

In the vehicle 10A having the above-described configurations, the air brake device 50 is controlled by a control device 80. The control device 80 also receives, from the rotation sensors 72, signals indicative of the values of the axial rotational speed X2 of the axles 42, which are detected by the rotation sensors 72. The control device 80 also receives a signal indicative of a brake instruction X6 from a brake controller 76, which is operated by the driver of the train 100. In this embodiment, the brake controller 76 includes a lever configured to be operated by the driver. The brake controller 76 has a plurality of notches corresponding to different levels for defining the position to which this lever is to be operated. The brake controller 76 is configured to output a signal representing the brake instruction X6 corresponding to the position of the lever, which results from the operation of the lever by the driver. Note that the control device 80 corresponds to the brake control device.

The control device 80 includes an instruction value calculation unit 81 that calculates an instruction value A of the air pressure supplied to the air brake device 50 when the vehicle 10A puts on its brake. The instruction value calculation unit 81 calculates the instruction value A as a positive value that gradually increases based on the brake instruction X6 generated according to the position of the lever of the brake controller 76.

The control device 80 includes a cylinder pressure value calculation unit 82 that performs correction of the instruction value A for a running state of the vehicle 10A to output a brake cylinder pressure value B. The cylinder pressure value calculation unit 82 corrects the instruction value A based on the brake instruction X6 and the axial rotational speed X2 and calculates the brake cylinder pressure value B. Here, the brake cylinder pressure value B indicates an air pressure that should be actually supplied to the air brake device 50 in order to control the air brake device 50 according to the running state of the vehicle 10A.

The control device 80 includes a determination unit 83 for determining an abnormality of the air brake device 50 in the vehicle 10A. The determination unit 83 determines whether there is an abnormality of the air brake device 50 in the vehicle 10A based on the instruction value A and the brake cylinder pressure value B. Here, the abnormality of the air brake device 50 in the vehicle 10A includes not only abnormalities of the air brake device 50 itself, but also abnormalities of the air supply source 61, the control valve 62, and the supply channel 63. The determination performed by the determination unit 83 here corresponds to a determination step and a determination process.

The control device 80 includes a control unit 84 for controlling the air brake device 50. More specifically, the brake control unit 84 outputs a control signal to the control valve 62 to control an opening position of the control valve 62. By adjusting the opening position of the control valve 62, the amount of the air distributed through the supply channel 63 can be adjusted. In this way, the air brake device 50 is driven. Accordingly, in this embodiment, the control device 80 collectively controls all of the eight air brake devices 50 through the single control valve 62 provided in the vehicle 10A. Further, the control device 80 includes a storage unit 85 that stores a brake efficiency C indicating a ratio between the instruction value A and the brake cylinder pressure value B. The storage unit 85 stores the brake efficiency C indicating the ratio between the instruction value A and the brake cylinder pressure value B for a predetermined fixed period. The fixed period is, for example, several months.

The control device 80 further includes an instruction value obtaining unit 86 that obtains the instruction value A of the air pressure. Further, the control device 80 includes a cylinder pressure value obtaining unit 87 that obtains the brake cylinder pressure value B. The obtainment by the instruction value obtaining unit 86 here corresponds to an instruction value obtaining step and an instruction value obtaining process. The obtainment by the cylinder pressure value obtaining unit 87 here corresponds to a cylinder pressure obtaining process and a cylinder pressure obtaining process.

Alternatively, the controller 80 may be formed as a circuitry including: 1) one or more processors that perform various processes in accordance with a computer program (software); 2) one or more dedicated hardware circuits such as application-specific integrated circuits (ASICs) that perform at least a part of the various processes; or 3) a combination thereof. The processor includes a CPU and a memory such as a RAM or ROM. The memory stores program codes or instructions configured to cause the CPU to perform processes. The memory, in other words, a computer-readable medium, encompasses any kind of available medium accessible by a general-purpose or dedicated computer. As shown in Fig. 1, the control device 80 is capable of communicating with the control device 80 in the other three vehicles 10. Note that the control device 80 also serves as the brake abnormality determination device.

The following now describes an abnormality determination control performed by the control device 80. The control device 80 performs the abnormality determination control repeatedly at predetermined intervals from the time when the control device 80 starts to operate to the time when the control device 80 stops to operate. The control device 80 in the vehicle 10A represents the four control devices 80 in the vehicles 10A to 10D and performs the abnormality determination control for each of the vehicles 10A to 10D. Specifically, the control device 80 in the vehicle 10A performs the abnormality determination control for each of the vehicles 10A to 10D, and the control devices 80 in the vehicles 10B to 10D do not perform the abnormality determination control.

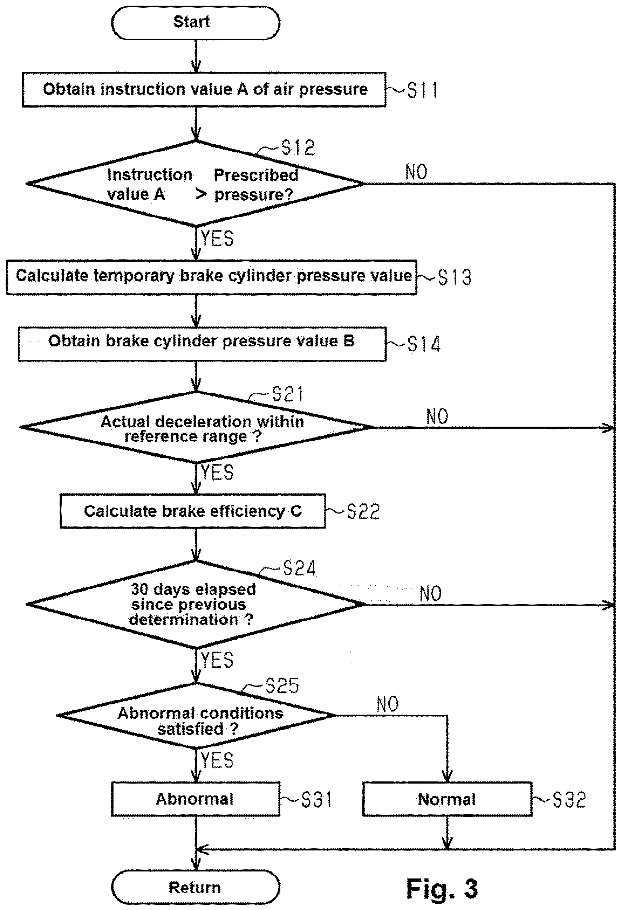

As shown in Fig. 3, once the control device 80 starts the abnormality determination control, step S11 is performed by the control device 80. In step S11, the instruction value obtaining unit 86 in the control device 80 obtains the instruction value A calculated by the instruction value calculation unit 81. The instruction value calculation unit 81 in the control device 80 first calculates the instruction value A based on the brake instruction X6 generated according to the position of the lever of the brake controller 76. The instruction value A is calculated as a value commonly applied to the eight air brake devices 50 in the vehicle 10A. Further, since the four vehicles 10 are controlled by the same brake controller 76, the control device 80 in the vehicle 10A calculates the instruction values A for the four vehicles 10 as the same value. The instruction value obtaining unit 86 in the control device 80 then obtains the instruction value A calculated by the instruction value calculation unit 81. The controller 80 proceeds to step S12.

In the step S12, the control device 80 determines whether the instruction value A of the air pressure is larger than a prescribed pressure. Here, the prescribed pressure is set as same as the instruction value A that is set when a brake shoe in the air brake device 50 and a tread surface, which is the outer peripheral surface of the wheel 43, are farthest apart. That is, in step S12, it is determined whether the lever of the brake controller 76 is operated to brake the wheel 43. In step S12, when the control device 80 determined that the instruction value A of the air pressure is equal to or lower than the predetermined prescribed pressure (S12: NO), the control device 80 ends the current abnormality determination control. When the abnormality determination control is terminated without performing any of step S31 and step S32 described later, the result of the last determination of presence or absence of the abnormality is used. When the control device 80 is manufactured, the control device 80 stores the state of the air brake device 50 as normal. Whereas when the control device 80 determined that the instruction value A of the air pressure is larger than the predetermined prescribed pressure (S12: YES) in step S12, it proceeds to step S13.

In step S13, the cylinder pressure value calculation unit 82 in the control device 80 corrects the instruction value A based on the brake instruction X6 and the axial rotational speed X2 and then calculates a temporary brake cylinder pressure value. Specifically, the cylinder pressure value calculation unit 82 calculates a target deceleration of the vehicle 10A based on the brake instruction X6. Here, the target deceleration is a target value of negative acceleration of the vehicle 10A when the vehicle 10A slows down. The larger the value of the brake instruction X6 is, the cylinder pressure value calculation unit 82 outputs the target deceleration with a larger absolute value. Further, the cylinder pressure value calculation unit 82 calculates an actual deceleration of the vehicle 10A based on the axial rotational speed X2. Here, the actual deceleration is an actual negative acceleration when the vehicle 10A slows down. As the amount of decrease in the axial rotational speed X2 per unit time increases, the cylinder pressure value calculation unit 82 outputs the actual deceleration with a larger absolute value. The cylinder pressure value calculation unit 82 then calculates the temporary brake cylinder pressure value from the instruction value A in order to perform a control in which the actual deceleration approaches the target deceleration, that is, so-called deceleration feedback control. For example, when the actual deceleration is smaller than the target deceleration, the cylinder pressure value calculation unit 82 corrects the temporary brake cylinder pressure value such that it becomes larger than the instruction value A. Whereas when the actual deceleration is larger than the target deceleration, the cylinder pressure value calculation unit 82 corrects the temporary brake cylinder pressure value such that it becomes smaller than the instruction value A. The cylinder pressure value calculation unit 82 sets the temporary brake cylinder pressure value for each of the vehicles 10A to 10D in order to perform the deceleration feedback control for each of the vehicles 10A to 10D, that is, a distributed deceleration feedback control for the vehicles. Subsequently the controller 80 proceeds to step S14.

In step S14, the cylinder pressure value calculation unit 82 in the control device 80 calculates the brake cylinder pressure value B based on the temporary brake cylinder pressure value. The cylinder pressure value calculation unit 82 corrects the temporary brake cylinder pressure value and calculates the brake cylinder pressure value B such that it satisfies the following two conditions.

Condition (1): The brake cylinder pressure value B relative to the instruction value A is set to fall within a prescribed range.

Condition (2): A difference between a maximum among the brake cylinder pressure values B of the vehicles 10A to 10D and a minimum among the brake cylinder pressure values B of the vehicles 10A to 10D is equal to or less than a prescribed value.

Here, the prescribed width in the condition (1) is set to keep the value of the brake cylinder pressure B within a certain range relative to the instruction value A. For example, the prescribed range is about plus or minus several tens of% of the instruction value A with the instruction value A as the median.

To satisfy the condition (2), the cylinder pressure value calculation unit 82 first calculates the difference between the maximum among the temporary brake cylinder pressure values of the vehicle 10A to 10D and the minimum among the temporary brake cylinder pressure values of the vehicle 10A to 10D. When the calculated difference is larger than the prescribed value, the cylinder pressure value calculation unit 82 subtracts a predetermined value from the maximum of the temporary brake cylinder pressure value and add a predetermined value to the minimum of the temporary brake cylinder pressure value. The cylinder pressure value calculation unit 82 repeatedly executes this process including the calculation of the difference, the addition, and the subtraction until the condition (2) is satisfied. In this embodiment, the prescribed value is same as the difference between an upper limit and a lower limit of the above prescribed range. The cylinder pressure value calculation unit 82 then sets the temporary brake cylinder pressure value that satisfies the conditions (1) and (2) as the current brake cylinder pressure value B. Further, the cylinder pressure value obtaining unit 87 in the control device 80 obtains the brake cylinder pressure value B calculated by the cylinder pressure value calculation unit 82. Subsequently the control device 80 proceeds to step S21.

In step S21, the determination unit 83 in the control device 80 determines whether the actual deceleration is within a predetermined reference range. Here, to set the reference range through experiments or the like, assuming that the vehicle 10 travels in a place where the gradient of the rail is less than a predetermined value, and a deceleration of the vehicle 10 caused as a result of the brake control with the maximum instruction value A is set as an upper limit of the reference range. A value that is several tens of percent smaller than this upper limit is set as a lower limit of the reference range. The reference range is defined as a range between the above upper limit and lower limit.

In step S21, when the control device 80 determined that the actual deceleration is out of the predetermined reference range (S21: NO), the control device 80 terminates the current abnormality determination control. Whereas when the control device 80 determined that the actual deceleration is within the predetermined reference range (S21: YES) in step S21, it proceeds to step S22.

In step S22, the determination unit 83 in the control device 80 calculates the brake efficiency C as a value indicating a ratio between the instruction value A and the brake cylinder pressure value B. The brake efficiency C is calculated by the "brake cylinder pressure value B / the instruction value A". Further, the storage unit 85 in the control device 80 stores the brake efficiency C calculated at the current control. Subsequently the control device 80 proceeds to step S24.

In step S24, the determination unit 83 in the control device 80 determines whether 30 days have passed since the previous determination was performed. Here, the previous determination is the determination in either step S31 or step S32, which will be described later. In step S24, when it is determined that 30 days have not passed yet since the previous determination (S24: NO), the control device 80 terminates the current abnormality determination control. Whereas when it is determined that 30 days have passed since the previous determination (S24: YES) in step S24, the control device 80 proceeds to step S25.

In step S25, the determination unit 83 in the control device 80 determines whether the brake efficiency C stored in the storage unit 85 satisfies predetermined abnormality conditions. Specifically, the following two conditions are defined as abnormal conditions.

Condition (3): The absolute value of the amount of change in the braking efficiency C is equal to or greater than a predetermined threshold value.

Condition (4): The positive/negative of the change amount of the brake efficiency C for the vehicle 10 is different from the positive/negative of the change amount of the brake efficiency C for the other three vehicles 10.

Here, the threshold value in the condition (3) is determined as follows. A new air brake device 50 or the like with no abnormality occurred therein is used and the brake efficiency C of the air brake device 50 is measured for 30 days. An average of values of the braking efficiency C measured for 30 days is obtained and a certain percentage of the average, for example, 10% of the average is set as the threshold value.

To determine whether the condition (3) is satisfied or not, the determination unit 83 in the control device 80 calculates an average of values of the brake efficiency C stored in step S22 during the period from the previously performed step S25 to the currently performed step S25, that is, in the last 30 days. And the average is set as a current average value CA (n) of the brake efficiency C. Further, the determination unit 83 calculates an average of values of the brake efficiency C stored in step S22 during the period from the step S25 performed before last to step S25 performed previously, that is, from 60 days to 30 days before. And the obtained average is set as a previous average value CA (n-1) of the brake efficiency C. Then, the determination unit 83 subtracts the current average value CA (n) from the previous average value CA (n-1) of the brake efficiency C and sets as an amount of change CA in the brake efficiency C. Since this process of step S25 is executed every 30 days, the change amount can in the brake efficiency C per 30 days is a change rate of the brake efficiency C.

In step S25, when the control device 80 determined that the condition (3) and the condition (4) as the abnormal conditions are both satisfied (S25: YES), it proceeds to step S31. In step S31, the determination unit 83 in the control device 80 determines that the air brake device 50 in the vehicle 10 is abnormal. After this, the control device 80 terminates the current abnormality determination control.

Whereas when the control device 80 determined that both the condition (3) and the condition (4) as the abnormal conditions are not satisfied (S25: NO) in step S25, it proceeds to step S32. In step S32, the determination unit 83 in the control device 80 determines that the air brake device 50 in the vehicle 10 is normal. After this, the control device 80 terminates the current abnormality determination control.

Note that, not only for the abnormality determination of the air brake device 50 in the vehicle 10A, the control device 80 in the vehicle 10A concurrently performs the above-described controls in the steps S11 to S32 also for abnormality determinations of the air brake devices 50 in other vehicles 10B to 10D.

The following now describes a brake control performed by the control device 80. The control device 80 performs the brake control when it is determined that the instruction value A of the air pressure becomes larger than the specified pressure. The control device 80 in the vehicle 10A represents the four control devices 80 in the vehicles 10A to 10D and performs the brake control. Specifically, the control device 80 in the vehicle 10A not only outputs a control signal to the control valve 62 in the vehicle 10A, but also to the control devices 80 in the vehicles 10B to 10D. The control devices 80 in the vehicles 10B to 10D each output a control signal to the respective control valve 62 in the vehicles 10B to 10D based on the control signal supplied from the control device 80 in the vehicle 10A.

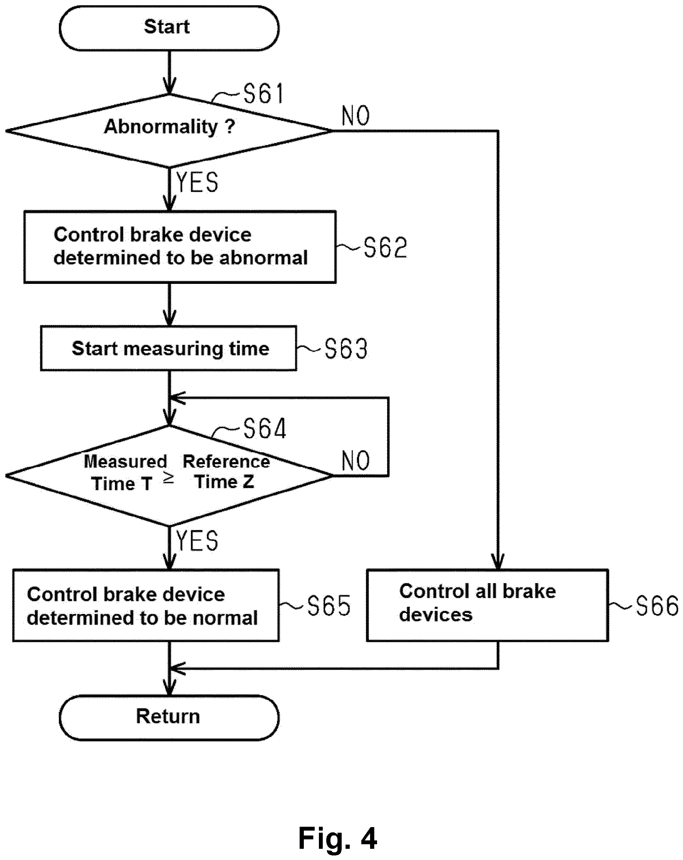

As shown in Fig. 4, once the control device 80 starts the brake control, step S61 is performed by the control device 80. In step S61, the control device 80 determines whether the air brake devices 50 in the vehicles 10A to 10D have been determined to be abnormal. If it is determined in step S61 that all the air brake devices 50 in the vehicles 10A to 10D are normal (S61: NO), the control device 80 proceeds to step S66.

In step S66, the control device 80 controls the air brake devices 50 of the four vehicles 10 at the same timing. Specifically, the control unit 84 of the control device 80 in the vehicle 10A outputs a control signal corresponding to the brake cylinder pressure value B of the vehicle 10A to the control valve 62 in the vehicle 10A. Further, the control device 80 in the vehicle 10A outputs control signals corresponding to the brake cylinder pressure values B of the vehicles 10B to 10D respectively to the corresponding control devices 80 of the vehicles 10 without delay. Then, the control unit 84 in each control device 80 of the vehicles 10B to 10D outputs the control signal to the corresponding control valve 62 in the vehicles 10B to 10D. Thus, the control valves 62 in the vehicles 10A to 10D are controlled at substantially the same timing.

When it is determined in step S61 that any of the air brake devices 50 in the vehicles 10A to 10D is abnormal (S61: YES), the control device 80 proceeds to step S62.

In step S62, the control device 80 performs a control on the air brake device 50 in the vehicle 10 that is determined to be abnormal. For example, when the vehicle 10 determined to have an abnormality is the vehicle 10A equipped with the control device 80 that represents the four control devices 80, the control unit 84 of the control device 80 in the vehicle 10A outputs a control signal corresponding to the brake cylinder pressure value B of the vehicle 10A to the control valve 62 in the vehicle 10A. Whereas when the vehicle 10 determined to have an abnormality is any of the vehicle 10B to 10D on which the control device 80 representing the four control devices 80 is not mounted, the control device 80 in the vehicle 10A outputs a control signal corresponding to the brake cylinder pressure value B of the vehicle 10 that has been determined to have the abnormality to the control device 80 of the vehicle 10. The control unit 84 of the control device 80 in the vehicle 10 that has been determined to have an abnormality outputs a control signal to the control valve 62 in the vehicle 10 that has been determined to have the abnormality. As described above, in step S62, among the four vehicles 10, only the air brake device 50 of the vehicle 10 that has been determined to have an abnormality is controlled. After this, the control device 80 proceeds to the step S63. In step S63, the control device 80 starts to measure a measured time T. Subsequently the control device 80 proceeds to step S64.

In step S64, the control device 80 determines whether the measured time T is equal to or greater than a predetermined reference time Z. The reference time Z is determined through experiments or the like. An unused control valve 62 immediately after being manufactured is first used in the experiment. A required time is measured from when adjustment of the opening position of the control valve 62 has been competed to when the air pressure supplied to the air brake device 50 is actually adjusted. Further, a used and aged control valve 62 is used in the experiment to measure a required time from when adjustment of the opening position of the control valve 62 has been competed to when the air pressure supplied to the air brake device 50 is actually adjusted. The reference time Z is set to the same value as a difference between the required time for the unused control valve 62 immediately after being manufactured and the required time for the aged control valve 62. The reference time Z is, for example, about several tens to several hundreds of milliseconds.

In step S64, when the control device 80 determined that the measured time T is less than the predetermined reference time Z (S64: NO), the control device 80 repeatedly performs step S64. That is, it waits until the measured time T reaches the reference time Z. Whereas when the control device 80 determines that the measured time T is equal to or greater than the predetermined reference time Z (S64: YES) in step S64, it proceeds to step S65.

In step S65, the control device 80 performs a control on the air brake device 50 in the vehicle 10 that is determined to be normal. For example, when the vehicle 10 determined to be normal as described above is the vehicle 10A equipped with the control device 80 that represents the four control devices 80, the control unit 84 of the control device 80 in the vehicle 10A outputs a control signal corresponding to the brake cylinder pressure value B of the vehicle 10A to the control valve 62 in the vehicle 10A. Whereas when the vehicle 10 determined to be normal as described above is not the vehicle 10A equipped with the control device 80 that represents the four control devices 80, the control unit 84 of the control device 80 in the vehicle 10A outputs, to the control device(s) 80 in the vehicle(s) 10 that has been determined to be normal among the vehicles 10B to 10D, a control signal corresponding to the brake cylinder pressure value B of the vehicle 10. The control unit 84 of the control device 80 in the vehicle 10 that has been determined to be normal outputs a control signal to the control valve 62 in the vehicle 10 that has been determined to have the abnormality. As described above, in step S65, among the four vehicles 10, the air brake devices 50 of the three vehicles 10 that have been determined to be normal are controlled. At least the reference time Z has elapsed from step S62 to step S65 described above. Therefore, after the air brake device 50 of the vehicle 10 determined to be abnormal is controlled, the air brake devices 50 of the vehicles 10 determined to be normal are controlled with a delay of the reference time Z. The control device 80 terminates the current abnormality determination control thereafter.

Operation of the embodiment will be now described.

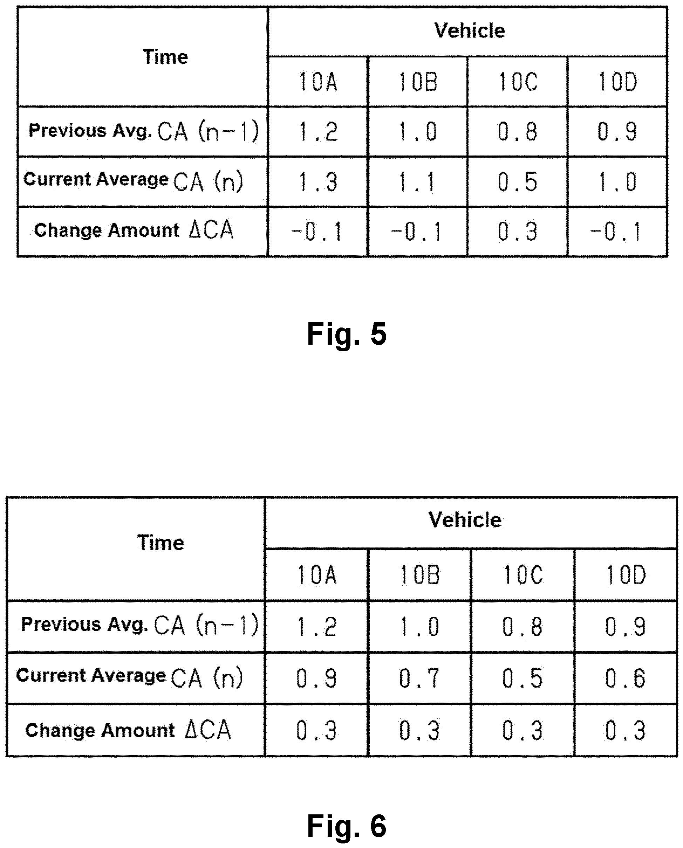

The operation of the abnormality determination control will be hereinafter described with reference to Figs. 5 and 6. In the example shown in Fig. 5, it is assumed that an abnormality of the air brake device 50 occurs in the vehicle 10C immediately before the current abnormality determination control is performed. In the current abnormality determination control, the control device 80 om the vehicle 10A subtracts the current average value CA (n) from the previous average value CA (n-1) of the brake efficiency C for the vehicles 10A to 10D and outputs it as the change amount CA in the brake efficiency C.

In the example shown in Fig. 5, it is assumed that the change amount car in the brake efficiency C of the vehicle 10C is "0.3", and therefore the absolute value of the change amount can in the brake efficiency C of the vehicle 10C is equal to or more than a predetermined threshold value so that the condition (3) of the abnormal condition is satisfied. Further, in the example shown in Fig. 5, the change amounts car in the brake efficiency C of the vehicle 10A, the vehicle 10B, and the vehicle 10D are "-0.1". In this case, the change amounts CA in the brake efficiency C of the vehicle 10A, the vehicle 10B, and the vehicle 10D are negative values, and the change amount ΔCA in the brake efficiency C of the vehicle 10C is a positive value. Accordingly, the condition (4) is satisfied. Therefore, in the example shown in Fig. 5, the air brake device 50 in the vehicle 10C is determined to be abnormal.

Whereas in the example shown in Fig. 6, the change amounts ΔCA in the brake efficiency C of the vehicle 10A, the vehicle 10B, and the vehicle 10D are "0.3". In this case, the change amounts ΔCA in the brake efficiency C of the vehicle 10A, the vehicle 10B, and the vehicle 10D are positive values, and the change amount ΔCA in the brake efficiency C of the vehicle 10C is a positive value. Accordingly, the condition (4) is not satisfied. Therefore, in the example shown in Fig. 6, even when the absolute value of the change amount ΔCA in the brake efficiency C of the vehicle 10C is equal to or more than the predetermined threshold value and the condition (3) of the abnormal condition is satisfied, it is determined that the air brake device 50 in the vehicle 10C is normal similarly to the example of Fig. 5.

Focusing on the abnormality determination of the vehicle 10C in the above example, the air brake device 50 in the vehicle 10C is the first air brake device, and the air brake devices 50 in the other three vehicles 10 are the second air brake devices. The instruction value A and the brake cylinder pressure value B of the air brake device 50 in the vehicle 10C are the first instruction value and the first brake cylinder pressure value, and the instruction values A and the brake cylinder pressure values B of the air brake devices 50 in the other three vehicles 10 are the second instruction values and the second brake cylinder pressure values.

The following now describes operation of the brake control. When the air brake device 50 is determined to have an abnormality in the above-mentioned abnormality determination control, the abnormality is likely to be caused by an impaired responsiveness of the control valve 62 in the vehicle 10 that has been determined to have the abnormality, clogging of the supply channel 63 in the vehicle 10 that has been determined to have the abnormality, or the like. When the responsiveness of the control valve 62 is impaired or the supply channel 63 is clogged, it takes longer for the air pressure supplied to the air brake device 50 to be actually adjusted after the opening position of the control valve 62 is adjusted. Therefore, even when the control valves 62 in the four vehicles 10 are controlled at the same timing, the timing at which the air brake device 50 in the vehicle 10 that has been determined to be abnormal actually starts to drive is delayed compared to the vehicles 10 that have been determined to be normal. When there is a difference in the timing at which the air brake device 50 actually starts to drive between the vehicles 10, the load on the air brake device 50 in the vehicle 10 that drives earlier than the others may become excessively large.

To avoid this, as in the example shown in Fig. 5, the brake timings of the four vehicles 10A to 10D are controlled as the brake control when it is determined that the air brake device 50 of the vehicle 10C is abnormal. Specifically, in the brake control, the control device 80 in the vehicle 10A first outputs a control signal to only the control valve 62 in the vehicle 10C that has been determined to be abnormal. Then, after the reference time Z has elapsed, the control device 80 in the vehicle 10A outputs control signals to the control valves 62 of the three vehicles 10 that have been determined to be normal. Consequently, in the three vehicles 10 determined to be normal, the timing at which the air pressure supplied to the air brake device 50 is adjusted is delayed compared to the case where the control valves 62 of the four vehicles 10 are controlled at the same timing. In this way, it is possible to reduce a difference between the timing at which the air pressure supplied to the air brake device 50 in the vehicle 10C that has been determined to be abnormal is adjusted, and the timing at which the air pressure supplied to the air brake devices 50 in the three vehicles 10 determined to be normal is adjusted. As a result, even if the responsiveness of the control valve 62 in the vehicle 10 determined to be abnormal is impaired or the supply channel 63 in the vehicle 10 determined to be abnormal is clogged, it is possible to prevent the load on some of the air brake devices 50 in the four vehicles 10 from becoming excessively large.

Advantageous effects of the embodiment will be now described.
(1) In the vehicle 10, when the responsiveness of the control valve 62 is impaired or the supply channel 63 is clogged, it becomes difficult to supply the air to the air brake device 50 according to the position of the lever of the brake controller 76 operated by the driver. Here, if the abnormality occurs in the air brake device as described above, the actual deceleration of the vehicle 10 changes due to the change in the drive of the air brake device 50. To determine the abnormality of the air brake device 50, it is conceivable to determine the abnormality of the air brake device 50 based on the brake cylinder pressure value B that changes depending on the actual deceleration of the vehicle 10. However, the brake cylinder pressure value B can be changed depending on not only the actual deceleration of the vehicle 10 but also the instruction value A which changes according to the position of the lever of the brake controller 76 operated by the driver. Therefore, the abnormality of the air brake device 50 cannot always be accurately determined only with the brake cylinder pressure value B. Whereas the control device 80 in the vehicle 10A calculates the brake efficiency C as a value indicating the ratio between the instruction value A and the brake cylinder pressure value B. Here, since the brake efficiency C is a value indicating the ratio of the instruction value A and the brake cylinder pressure value B, the change in the instruction value A less affects. Therefore, it can be said that the brake efficiency C is a value focusing on the actual deceleration of the vehicle 10 that changes in accordance with the drive of the air brake device 50. In this way, the control device 80 is able to determine an abnormality of the air brake device 50 based on the change amount ΔCA in the brake efficiency C.
(2) As shown in the example of Fig. 5, when an abnormality occurs in the air brake device 50 in the vehicle 10C, the brake efficiency C of the vehicle 10C suddenly changes as the brake cylinder pressure value B of the vehicle 10C suddenly changes. Accordingly, the control device 80 in the vehicle 10A determines that the air brake device 50 is abnormal on the condition that the absolute value of the change amount ΔCA in the brake efficiency C is equal to or more than the predetermined threshold value. In this way, it is possible to determine that the air brake device 50 in the vehicle 10C is abnormal based on the sudden change in the braking efficiency C of the vehicle 10C.
(3) The control device 80 in the vehicle 10A calculates the average value of the brake efficiency C calculated a plurality of times. The control device 80 then calculates the change amount ΔCA in the brake efficiency C by subtracting the current average value CA (n) from the previous average value CA (n-1) of the brake efficiency C. In this way, a variation in the change amount ΔCA in the brake efficiency C can be made smaller compared to the case where the amount of change in the brake efficiency C is calculated based on the previous brake efficiency C calculated only once and the current brake efficiency C calculated only once.
(4) As shown in the example of Fig. 5, when an abnormality occurs in the air brake device 50 in the vehicle 10C, for example, the amount of air supplied to the air brake device 50 in the vehicle 10C is reduced, and the braking force by the air brake device 50 in the vehicle 10C is reduced. In this case, the calculated brake cylinder pressure values B of the vehicles 10A, 10B, and 10D are increased in order to secure the braking force of the entire train 100 in which the four vehicles 10 are connected, and consequently the change amount ΔCA in the braking efficiency C is increased. As the brake cylinder pressure values B of the vehicle 10A, 10B, and 10D are increased, the brake cylinder pressure value B of the vehicle 10C is calculated to be relatively small, and the change amount ΔCA in the brake efficiency C becomes small. As a result, as shown in the example of Fig. 5, the change amount ΔCA in the brake efficiency C of the vehicle 10 becomes a positive value, and the change amount ΔCA in the brake efficiency C in the other three vehicles 10 each becomes a negative value. Whereas when no abnormality has occurred in the air brake devices 50 in the four vehicles 10 as in the example of Fig. 6, the change amounts ΔCA in the brake efficiency C in the four vehicles are likely to be all positive values or all negative values. Therefore, the control device 80 in the vehicle 10A determines that the air brake device 50 is abnormal when the positive/negative of the change amount in the brake efficiency C in the vehicle 10 is different from the positive/negative of the change amounts in the brake efficiency C in the other three vehicles 10. Accordingly, when the change amounts ΔCA in the brake efficiency C of the four vehicles 10 all have the positive values or the negative values as in the example of Fig. 6, it is determined that the air brake device 50 in the vehicle 10C is normal even if the change amount ΔCA in the brake efficiency C of the vehicle 10C is equal to or greater than the threshold value as shown in the example of Fig. 5. In this way, it is possible to prevent the air brake device 50 in the vehicle 10C from being erroneously determined to be abnormal when the air brake device 50 in the vehicle 10C operates normally.
(5) When the vehicle 10 is traveling on a rail whose gradient is large, for example, a steep downhill, the actual deceleration of the vehicle 10 tends to decrease because the vehicle 10 is accelerated by gravity while the air brake device 50 is used in the same manner as when the vehicle 10 is traveling on a rail with a gradient smaller than a predetermined value. When the actual deceleration of the vehicle 10 becomes small in this way, the calculated brake cylinder pressure value B is increased. As the brake cylinder pressure value B is calculated to be large, the brake efficiency C may be excessively increased. Moreover, when the vehicle 10 is traveling on a rail whose gradient is large, for example, a steep uphill, the actual deceleration of the vehicle 10 tends to increase because the vehicle 10 is decelerated by gravity while the air brake device 50 is used in the same manner as when the vehicle 10 is traveling on a rail with a gradient smaller than a predetermined value. When the actual deceleration of the vehicle 10 becomes large in this way, the calculated brake cylinder pressure value B is decreased. As the brake cylinder pressure value B is calculated to be small, the brake efficiency C may be excessively reduced.
   As described above, when the vehicle 10 is traveling where the gradient of the rail is large, the braking efficiency C becomes excessively large or small. Therefore, when determining the presence or absence of an abnormality of the air brake device 50 based on such a brake efficiency C, the air brake device 50 may be erroneously determined as abnormal although the device operates normally, or the air brake device 50 may be erroneously determined as normal although the device operates abnormally.
   Therefore, the control device 80 in the vehicle 10A calculates the brake efficiency C on condition that the actual deceleration is within the predetermined reference range. As mentioned above, to set the reference range through experiments or the like, assuming that the vehicle 10 travels in a place where the gradient of the rail is less than a predetermined value, and a deceleration of the vehicle 10 caused as a result of the brake control with the maximum instruction value A is set as an upper limit of the reference range. A value that is several tens of percent smaller than this upper limit is set as a lower limit of the reference range. The reference range is defined as a range between the above upper limit and lower limit. Thus, the control device 80 can determine that the vehicle 10 is traveling where the gradient of the rail is less than the predetermined value based on the fact that the actual deceleration is within the predetermined reference range. The control device 80 calculates the brake efficiency C on the condition that the vehicle 10 is traveling where the gradient of the rail is less than the predetermined value. In this way, it is prevented that the control device 80 calculates an excessively large or small brake efficiency C when the vehicle 10 travels where the gradient of the rail is large. As a result, it is possible to improve the accuracy of determination for the air brake device 50 based on a change in the brake efficiency C.
(6) To calculate the brake cylinder pressure B, the control device 80 in the vehicle 10A corrects the instruction value A such that the value of the brake cylinder pressure B relative to the instruction value A falls within the prescribed range. Accordingly, the correction amount of the brake cylinder pressure value B relative to the instruction value A does not become excessively large or small beyond the prescribed range. Therefore, the brake efficiency C calculated based on the instruction value A and the brake cylinder pressure value B does not become excessively large or small. As a result, it is possible to prevent an adverse effect on the determination of the presence or absence of abnormality of the air brake device 50, which is determined based on the brake efficiency C.
(7) The control device 80 in the vehicle 10A calculates the brake cylinder pressure value B such that a difference between the maximum among the brake cylinder pressure values B of the vehicles 10A to 10D and the minimum among the brake cylinder pressure values B of the vehicles 10A to 10D becomes equal to or less than a prescribed value. Therefore, it is prevented that the difference between the maximum among the brake cylinder pressure values B of the vehicles 10A to 10D and the minimum among the brake cylinder pressure values B of the vehicles 10A to 10D becomes excessively large beyond the prescribed value. Consequently, it is possible to prevent that the brake cylinder pressure value B of some of the vehicles 10A to 10D becomes excessively large or small and thereby it is possible to prevent the air brake device 50 in the vehicle 10 from being erroneously determined to be abnormal even though the air brake device operates normally. Further, it is prevented that the load on the air brake device 50 of the vehicle 10 becomes excessively large due to increase of the brake cylinder pressure value B of some of the vehicles 10A to 10D. Moreover, it is prevented that the brake shoe of the air brake device 50 in any of the vehicles 10A to 10D is pressed excessively strongly against the tread of the wheel 43 due to the increase of the brake cylinder pressure value B of the vehicle 10. Therefore, the brake shoe will not be excessively worn.
(8) Even when the control valves 62 in the four vehicles 10 are controlled at the same timing, the timing at which the air brake device 50 in the vehicle 10 that has been determined to be abnormal actually starts to drive is delayed compared to the vehicles 10 that have been determined to be normal. When there is a difference in the timing at which the air brake device 50 actually starts to drive between the vehicles 10, the load on the air brake device 50 in the vehicle 10 that drives earlier than the others may become excessively large in order to compensate the delay. In this respect, the control device 80 in the vehicle 10A first outputs a control signal to only the control valve 62 in the vehicle 10C that has been determined to be abnormal. Then, after the reference time Z has elapsed, the control device 80 in the vehicle 10A outputs control signals to the control valves 62 of the three vehicles 10 that have been determined to be normal. Consequently, in the three vehicles 10 determined to be normal, the timing at which the air pressure supplied to the air brake device 50 is adjusted is delayed compared to the case where the control valves 62 of the four vehicles 10 are controlled at the same timing. In this way, it is possible to reduce a difference between the timing at which the air pressure supplied to the air brake device 50 in the vehicle 10C that has been determined to be abnormal is adjusted, and the timing at which the air pressure supplied to the air brake devices 50 in the three vehicles 10 determined to be normal is adjusted. As a result, even if the responsiveness of the control valve 62 in the vehicle 10 determined to be abnormal is impaired or the supply channel 63 in the vehicle 10 determined to be abnormal is clogged, it is possible to prevent the load on some of the air brake devices 50 in the four vehicles 10 from becoming excessively large.

The above embodiment can be modified as described below. The above embodiment and the following modifications can be implemented in combination to the extent where they are technically consistent with each other.

In the above embodiments, the abnormal determination control can be modified. For example, the control device 80 may perform the calculation of the brake efficiency C and the subsequent processing regardless of whether or not the actual deceleration is within the predetermined reference range.

Further, the control device 80 may change the cycle for determining the presence or absence of an abnormality of the air brake device 50, for example. As a specific example, in step S24, the control device 80 may determine whether one day has passed since the previous determination, or may determine whether 100 days have passed since the previous determination. In this case, the time span used for calculating the average value of the brake efficiency C may be changed according to the period in step S24.

Alternatively, the control device 80 does not have to calculate the average value of the brake efficiency C. In this case, every time the brake efficiency C is calculated, the change amount ΔCA in the brake efficiency C can be obtained by subtracting the brake efficiency C calculated this time from the brake efficiency C calculated previous time. Moreover, for example, by calculating the brake efficiency C only when the vehicle is stopped at a specific station under the same conditions, it is possible to suppress the variation in the brake efficiency C that is not caused by an abnormality of the air brake device 50.

Alternatively, the control device 80 in the vehicle 10 may determine the presence or absence of an abnormality of the air brake device 50 regardless of whether the positive/negative of the change amount in the brake efficiency C in the vehicle 10 is different from the positive/negative of the change amounts in the brake efficiency C in the other three vehicles 10.

Alternatively, the control device 80 may use a difference obtained by subtracting the brake cylinder pressure value B from the instruction value A as the value indicating the magnitude relationship between the instruction value A and the brake cylinder pressure value B.

Alternatively, the control device 80 may determine the presence or absence of an abnormality of the air brake device 50 based on the condition that the magnitude relationship between the instruction value A and the brake cylinder pressure value B is reversed, for example. As a specific example, the control device 80 may determine that the air brake device 50 is abnormal based on the condition that the instruction value A, which is initially larger than the brake cylinder pressure value B, decreases to equal to or less than the brake cylinder pressure value B or the condition that the instruction value A, which is initially smaller than the brake cylinder pressure value B, increases to equal to or higher than the brake cylinder pressure value B.

In the above embodiment, the configuration for calculation of the brake cylinder pressure value B can be changed. For example, it is not necessary that the brake cylinder pressure value B relative to the instruction value A is set to fall within a prescribed range. That is, to calculate the brake cylinder pressure B, the control device 80 may correct the instruction value A regardless of whether the value of the brake cylinder pressure B relative to the instruction value A falls within the prescribed range.

Alternatively, a difference between the maximum among the brake cylinder pressure values B of the vehicles 10A to 10D and the minimum among the brake cylinder pressure values B of the vehicles 10A to 10D may exceed a prescribed value. For example, when the performance of the air brake device 50 is different for each vehicle 10, there will be less occasions to require the difference between the maximum among the brake cylinder pressure values B of the vehicles 10A to 10D and the minimum among the brake cylinder pressure values B of the vehicles 10A to 10D to be equal to or less than the prescribed value.

Alternatively, the cylinder pressure value obtaining unit 87 in the control device 80 may not necessarily obtain the brake cylinder pressure value B calculated by the cylinder pressure value calculation unit 82. For example, a pressure sensor that detects an air pressure actually supplied to the air brake device 50 may be provided in the supply passage 63, and the cylinder pressure value obtaining unit 87 may set the pressure value detected by the pressure sensor as the brake cylinder pressure value B.

In the above embodiment, the control device 80 in the vehicle 10A performs the distributed deceleration feedback control for the vehicles. However, it is not necessary to perform the deceleration feedback control for each vehicle 10. For example, the control device 80 in the vehicle 10A may calculate an average value of the actual deceleration of the entire train 100. Then, the control device 80 may perform the deceleration feedback control such that the average value of the actual deceleration of the entire train 100 approaches a target deceleration of the entire train 100. In this case, a single brake cylinder pressure value B is calculated for the entire train 100, and a single brake efficiency C is calculated for the entire train 100. Then, the determination unit 83 in the control device 80 can determine whether there is an abnormality of the air brake devices 50 in the train 100 based on the obtained brake efficiency C.

In the above embodiment, the brake control performed in response to the abnormality determination can be modified. For example, the reference time Z may be adequately changed.

Alternatively, the brake control in response to the abnormality determination may be omitted, for example. Even in this case, as long as an abnormality of the air brake device 50 is determined by the abnormality determination control, the determination result can be used for maintenance of the air brake device 50 or the like.

In the above embodiment, the configuration of the controller 80 can be modified. For example, the control device 80 may be configured as a control device that controls two or more vehicles 10 in a unified manner, or a control device that controls the entire train 100 in a collective manner.

Alternatively, the determination unit 83 in the control device 80 does not have to determine whether there is an abnormality of the air brake device 50, for example. As a specific example, the storage unit 85 in the control device 80 may store a change in the braking efficiency C. In this case, when a maintenance work is performed on the air brake device 50, a maintenance work operator or a determination device different from the control device 80 may determine the presence or absence of abnormality of the air brake device 50 based on the change in the brake efficiency C stored in the storage unit 85. In this manner, the determination result of the presence or absence of abnormality of the air brake device 50 can be utilized for maintenance works such as replacement of the air brake device 50 and replacement of the control valve 62. Further, as a specific example, the storage unit 85 in the control device 80 may store the instruction value A and the brake cylinder pressure value B. In this configuration, the brake efficiency C is calculated from the instruction value A and the brake cylinder pressure value B stored in the storage unit 85, and the presence or absence of abnormality of the air brake device 50 can be determined based on calculated the brake efficiency C.

In the above embodiment, the configuration of the air brake device can be modified. For example, as the air brake device, a so-called disc brake type air brake device that brakes a disc rotating integrally with the axle 42 by pressing a pair of brake pads against the disc may be adopted.

### LIST OF REFERENCE NUMBERS

- A: instruction value
- B: brake cylinder pressure value
- C: brake efficiency
- CA: average value
- T: measured time
- Z: reference time
- ΔCA: change amount
- X2: axial rotational speed
- X6: brake instruction
- 10: vehicle
- 10A: vehicle
- 10B: vehicle
- 10C: vehicle
- 10D: vehicle
- 20: vehicle body
- 30: air spring
- 41: bogie
- 42: axle
- 43: wheel
- 50: air brake device
- 61: air supply source
- 62: control valve
- 63: supply channel
- 72: rotation sensor
- 76: brake controller
- 80: control device
- 81: instruction value calculation unit
- 82: cylinder pressure value calculation unit
- 83: determination unit
- 84: control unit
- 85: storage unit
- 86: instruction value obtaining unit
- 87: cylinder pressure value obtaining unit
- 100: train

## Claims

1. A brake control device, comprising:
an instruction value obtaining unit (86) obtaining an instruction value of an air pressure supplied to an air brake device (50) when braking a railway vehicle (10), **characterized by**
a cylinder pressure value obtaining unit (87) obtaining a brake cylinder pressure value calculated from the instruction value through a deceleration feedback control; and
a determination unit (83) determining whether there is an abnormality of the air brake device (50) based on the instruction value and the brake cylinder pressure value.

2. The brake control device according to claim 1, wherein the determination unit (83) calculates a difference or ratio between the instruction value and the brake cylinder pressure value, and when a change speed of the difference or ratio is equal to or higher than a predetermined threshold value, the determination unit (83) determines that there is an abnormality of the air brake device (50).

3. The brake control device according to claim 1 or 2, wherein the determination unit (83) determines that there is an abnormality of the air brake device (50) based on the instruction value and the brake cylinder pressure value that are obtained when a deceleration of the railway vehicle (10) is within a predetermined reference range.

4. The brake control device according to any one of claims 1 to 3, further comprising a cylinder pressure value calculation unit (82) calculating the brake cylinder pressure value from the instruction value through the deceleration feedback control,
wherein the cylinder pressure value calculation unit (82) corrects the instruction value within a predetermined range to calculate the brake cylinder pressure value.

5. The brake control device according to any one of claims 1 to 4, wherein the instruction value obtaining unit (86) obtains the instruction value for a first air brake device, which is one of a plurality of the air brake devices (50), as a first instruction value, and the instruction value for a second air brake device other than the first air brake device among the plurality of air brake devices (50) as a second instruction value,
wherein the cylinder pressure value obtaining unit (87) obtains the brake cylinder pressure value for the first air brake device as a first brake cylinder pressure value, and obtains the brake cylinder pressure value for the second air brake device as a second brake cylinder pressure value, and
wherein the determination unit (83) determines an abnormality of the first air brake device based on the first instruction value, the first brake cylinder pressure value, the second instruction value, and the second brake cylinder pressure value.

6. The brake control device according to claim 5, further comprising a cylinder pressure value calculation unit (82) calculating the brake cylinder pressure value from the instruction value through the deceleration feedback control,
wherein the cylinder pressure value calculation unit (82) corrects at least one of the first instruction value and the second instruction value such that a difference between the first brake cylinder pressure value and the second brake cylinder pressure value becomes equal to or less than a prescribed value.

7. The brake control device according to any one of claims 1 to 6, further comprising a storage unit (85) storing the instruction value and the brake cylinder pressure value.

8. An abnormality determination method, comprising:
a step (S11) of obtaining an instruction value of an air pressure supplied to an air brake device (50) when braking a railway vehicle (10);
a step (S14) of obtaining a brake cylinder pressure value calculated from the instruction value through a deceleration feedback control; and
a step (S25) of determining whether there is an abnormality of the air brake device (50) based on the instruction value and the brake cylinder pressure value.

9. An abnormality determination program causing a computer to perform the steps of:
obtaining an instruction value of an air pressure supplied to an air brake device (50) when braking a railway vehicle (10);
obtaining a cylinder pressure value calculated from the instruction value through a deceleration feedback control; and
determining whether there is an abnormality of the air brake device (50) based on the instruction value and the brake cylinder pressure value.

10. The brake control device according to any one of claims 1 to 7, wherein the instruction value obtaining unit (86) obtains the instruction value for a first air brake device, which is one of a plurality of the air brake devices (50), as a first instruction value, and the instruction value for a second air brake device other than the first air brake device among the plurality of air brake devices (50) as a second instruction value,
wherein the cylinder pressure value obtaining unit (87) obtains the brake cylinder pressure value for the first air brake device as a first brake cylinder pressure value, and obtains the brake cylinder pressure value for the second air brake device as a second brake cylinder pressure value, and
wherein the determination unit (83) determines an abnormality of the first air brake device based on the first instruction value and the first brake cylinder pressure value, and determines an abnormality of the second air brake device based on the second instruction value and the second brake cylinder pressure value, and
wherein the brake control device further comprising a control unit (84) that controls brake timings of the first air brake device and the second air brake device based on a result of the determination by the determination unit (83).

11. A computer-readable medium storing an abnormality determination program that causes a computer to perform the steps of:
obtaining an instruction value of an air pressure supplied to an air brake device (50) when braking a railway vehicle (10);
obtaining a cylinder pressure value calculated from the instruction value through a deceleration feedback control; and
determining whether there is an abnormality of the air brake device (50) based on the instruction value and the brake cylinder pressure value.

## Patentansprüche

1. Bremssteuerungs-Vorrichtung (2), umfassend:
eine Befehlswert-Erfassungseinheit (86), die einen Befehlswert eines Luftdrucks erfasst, der einer Druckluftbremsen-Vorrichtung (50) zugeführt wird, wenn ein Schienenfahrzeug (10) abgebremst wird, **gekennzeichnet durch**
eine Einheit (87) zum Erfassen eines Zylinder-Druckwertes, die einen Bremszylinder-Druckwert erfasst, der anhand des Befehlswertes mittels einer Verlangsamungs-Regelung berechnet wird; sowie
eine Feststellungs-Einheit (83), die auf Basis des Befehlswertes und des Bremszylinder-Druckwertes feststellt, ob eine Störung der Druckluftbremsen-Vorrichtung (50) vorliegt.

2. Bremssteuerungs-Vorrichtung nach Anspruch 1, wobei
die Feststellungs-Einheit (83) eine Differenz oder ein Verhältnis zwischen dem Befehlswert und dem Bremszylinder-Druckwert berechnet, und, wenn eine Änderungsgeschwindigkeit der Differenz oder des Verhältnisses auf oder über einem vorgegebenen Schwellenwert liegt, die Feststellungs-Einheit (83) feststellt, dass eine Störung der Druckluftbremsen-Vorrichtung (50) vorliegt.

3. Bremssteuerungs-Vorrichtung nach Anspruch 1 oder 2, wobei
die Feststellungs-Einheit (83) auf Basis des Befehlswertes und des Bremszylinder-Druckwertes, die erfasst werden, wenn eine Verlangsamung des Schienenfahrzeugs (10) innerhalb eines vorgegebenen Bezugsbereiches liegt, feststellt, dass eine Störung der Druckluftbremsen-Vorrichtung (50) vorliegt.

4. Bremssteuerungs-Vorrichtung nach einem der Ansprüche 1 bis 3,
die des Weiteren eine Einheit (82) für Berechnung eines Zylinder-Druckwertes umfasst, die den Bremszylinder-Druckwert anhand des Befehlswertes mittels der Verlangsamungs-Regelung berechnet,
wobei die Einheit (82) für Berechnung eines Zylinder-Druckwertes den Befehlswert innerhalb eines vorgegebenen Bereiches korrigiert, um den Bremszylinder-Druckwert zu berechnen.

5. Bremssteuerungs-Vorrichtung nach einem der Ansprüche 1 bis 4, wobei
die Befehlswert-Erfassungseinheit (86) den Befehlswert für eine erste Druckluftbremsen-Vorrichtung, die eine einer Vielzahl von Druckluftbremsen-Vorrichtungen (50) ist, als einen ersten Befehlswert erfasst, und den Befehlswert für eine zweite Druckluftbremsen-Vorrichtung, die eine andere als die erste Druckluftbremsen-Vorrichtung der Vielzahl von Druckluftbremsen-Vorrichtungen (50) ist, als einen zweiten Befehlswert erfasst,
die Einheit (87) zum Erfassen eines Zylinder-Druckwertes den Bremszylinder-Druckwert für die erste Druckluftbremsen-Vorrichtung als einen ersten Bremszylinder-Druckwert erfasst, und den Bremszylinder-Druckwert für die zweite Druckluftbremsen-Vorrichtung als einen zweiten Bremszylinder-Druckwert erfasst, und
wobei die Feststellungs-Einheit (83) eine Störung der ersten Druckluftbremsen-Vorrichtung auf Basis des ersten Befehlswertes, des ersten Bremszylinder-Druckwertes, des zweiten Befehlswertes und des zweiten Bremszylinder-Druckwertes feststellt.

6. Bremssteuerungs-Vorrichtung nach Anspruch 5,
die des Weiteren eine Einheit (82) für Berechnung eines Zylinder-Druckwertes umfasst, die den Bremszylinder-Druckwert anhand des Befehlswertes mittels der Verlangsamungs-Regelung berechnet,
wobei die Einheit (82) für Berechnung eines Zylinder-Druckwertes den ersten Befehlswert oder/und den zweiten Befehlswert so korrigiert, dass eine Differenz zwischen dem ersten Bremszylinder-Druckwert und dem zweiten Bremszylinder-Druckwert einen vorgeschriebenen Wert erreicht oder unterschreitet.

7. Bremssteuerungs-Vorrichtung nach einem der Ansprüche 1 bis 6, die des Weiteren eine Speicherungs-Einheit (85) umfasst, die den Befehlswert und den Bremszylinder-Druckwert speichert.

8. Verfahren für Feststellung von Störungen, umfassend:
einen Schritt (S11), in dem ein Befehlswert eines Luftdrucks erfasst wird, der einer Druckluftbremsen-Vorrichtung (50) zugeführt wird, wenn ein Schienenfahrzeug (10) abgebremst wird;
einen Schritt (S14), in dem ein Bremszylinder-Druckwert erfasst wird, der anhand des Befehlswertes mittels einer Verlangsamungs-Regelung berechnet wird; und
einen Schritt (83), in dem auf Basis des Befehlswertes und des Bremszylinder-Druckwertes festgestellt wird, ob eine Störung der Druckluftbremsen-Vorrichtung (50) vorliegt.

9. Programm für Feststellung von Störungen, das einen Computer veranlasst, die folgenden Schritte durchzuführen:
Erfassen eines Befehlswertes eines Luftdrucks, der einer Druckluftbremsen-Vorrichtung (50) zugeführt wird, wenn ein Schienenfahrzeug (10) abgebremst wird;
Erfassen eines Zylinder-Druckwertes, der anhand des Befehlswertes mittels einer Verlangsamungs-Regelung berechnet wird; und
Feststellen, ob eine Störung der Druckluftbremsen-Vorrichtung (50) vorliegt, auf Basis des Befehlswertes und des Bremszylinder-Druckwertes.

10. Bremssteuerungs-Vorrichtung nach einem der Ansprüche 1 bis 7, wobei
die Befehlswert-Erfassungseinheit (86) den Befehlswert für eine erste Druckluftbremsen-Vorrichtung, die eine einer Vielzahl von Druckluftbremsen-Vorrichtungen (50) ist, als einen ersten Befehlswert erfasst, und den Befehlswert für eine zweite Druckluftbremsen-Vorrichtung, die eine andere als die erste Druckluftbremsen-Vorrichtung der Vielzahl von Druckluftbremsen-Vorrichtungen (50) ist, als einen zweiten Befehlswert erfasst,
die Einheit (87) zum Erfassen eines Zylinder-Druckwertes den Bremszylinder-Druckwert für die erste Druckluftbremsen-Vorrichtung als einen ersten Bremszylinder-Druckwert erfasst, und den Bremszylinder-Druckwert für die zweite Druckluftbremsen-Vorrichtung als einen zweiten Bremszylinder-Druckwert erfasst,
die Feststellungs-Einheit (83) eine Störung der ersten Druckluftbremsen-Vorrichtung auf Basis des ersten Befehlswertes sowie des ersten Bremszylinder-Druckwertes feststellt und eine Störung der zweiten Druckluftbremsen-Vorrichtung auf Basis des zweiten Befehlswertes sowie des zweiten Bremszylinder-Druckwertes feststellt, und
die Bremssteuerungs-Vorrichtung des Weiteren eine Steuerungs-Einheit (84) umfasst, die Bremszeitpunkte der ersten Druckluftbremsen-Vorrichtung und der zweiten Druckluftbremsen-Vorrichtung auf Basis eines Ergebnisses der Feststellung durch die Feststellungs-Einheit (83) steuert.

11. Computerlesbares Medium, das ein Programm für Feststellung von Störungen speichert, das einen Computer veranlasst, die folgenden Schritte durchzuführen:
Erfassen eines Befehlswertes eines Luftdrucks, der einer Druckluftbremsen-Vorrichtung (50) zugeführt wird, wenn ein Schienenfahrzeug (10) abgebremst wird;
Erfassen eines Zylinder-Druckwertes, der anhand des Befehlswertes mittels einer Verlangsamungs-Regelung berechnet wird; und
Feststellen, ob eine Störung der Druckluftbremsen-Vorrichtung (50) vorliegt, auf Basis des Befehlswertes und des Bremszylinder-Druckwertes.

## Revendications

1. Dispositif de commande de frein, comprenant :
une unité d'obtention de valeur d'instruction (86) obtenant une valeur d'instruction d'une pression d'air fournie à un dispositif de freinage pneumatique (50) lors d'un freinage d'un véhicule ferroviaire (10), **caractérisé par**
une unité d'obtention de valeur de pression de cylindre (87) obtenant une valeur de pression de cylindre de frein calculée à partir de la valeur d'instruction via une commande de retour d'information de décélération ; et
une unité de détermination (83) déterminant la présence ou non d'une anomalie du dispositif de frein pneumatique (50) selon la valeur d'instruction et la valeur de pression de cylindre de frein.

2. Le dispositif de commande de frein selon la revendication 1, dans lequel l'unité de détermination (83) calcule une différence ou un rapport entre la valeur d'instruction et la valeur de pression de cylindre de frein, et lorsqu'une vitesse de changement de la différence ou du rapport est supérieure ou égale à une valeur de seuil prédéterminée, l'unité de détermination (83) détermine la présence d'une anomalie du dispositif de frein pneumatique (50).

3. Le dispositif de commande de frein selon la revendication 1 ou 2, dans lequel l'unité de détermination (83) détermine la présence d'une anomalie du dispositif de frein pneumatique (50) selon la valeur d'instruction et la valeur de pression de cylindre de frein qui sont obtenues lorsqu'une décélération du véhicule ferroviaire (10) s'inscrit dans une plage de référence prédéterminée.

4. Le dispositif de commande de frein selon l'une quelconque des revendications 1 à 3, comprenant en outre une unité de calcul de valeur de pression de cylindre (82) calculant la valeur de pression de cylindre de frein à partir de la valeur d'instruction via la commande de retour d'information de décélération,
dans lequel l'unité de calcul de valeur de pression de cylindre (82) corrige la valeur d'instruction au sein d'une plage prédéterminée pour calculer la valeur de pression de cylindre de frein.

5. Le dispositif de commande de frein selon l'une quelconque des revendications 1 à 4, dans lequel l'unité d'obtention de valeur d'instruction (86) obtient la valeur d'instruction pour un premier dispositif de frein pneumatique, qui est un d'une pluralité de dispositifs de frein pneumatique (50), en tant que première instruction, et la valeur d'instruction pour un deuxième dispositif de frein pneumatique autre que le premier dispositif de frein pneumatique parmi la pluralité de dispositifs de frein pneumatique (50) en tant que deuxième valeur d'instruction,
dans lequel l'unité d'obtention de valeur de pression de cylindre (87) obtient la valeur de pression de cylindre de frein pour le premier dispositif de frein pneumatique en tant que première valeur de pression de cylindre de frein, et obtient la valeur de pression de cylindre de frein pour le deuxième dispositif de frein pneumatique en tant que deuxième valeur de pression de cylindre de frein, et
dans lequel l'unité de détermination (83) détermine une anomalie du premier dispositif de frein pneumatique selon la première valeur d'instruction, la première valeur de pression de cylindre de frein, la deuxième valeur d'instruction et la deuxième valeur de pression de cylindre de frein.

6. Le dispositif de commande de frein selon la revendication 5, comprenant en outre une unité de calcul de valeur de pression de cylindre (82) calculant la valeur de pression de cylindre de frein à partir de la valeur d'instruction via la commande de retour d'information de décélération,
dans lequel l'unité de calcul de valeur de pression de cylindre (82) corrige au moins une de la première valeur d'instruction et de la deuxième valeur d'instruction de sorte qu'une différence entre la première valeur de pression de cylindre de frein et la deuxième valeur de pression de cylindre de frein devienne inférieure ou égale à une valeur prescrite.

7. Le dispositif de commande de frein selon l'une quelconque des revendications 1 à 6, comprenant en outre une unité de stockage (85) stockant la valeur d'instruction et la valeur de pression de cylindre de frein.

8. Procédé de détermination d'anomalie, comprenant :
une étape (S11) d'obtention d'une valeur d'instruction d'une pression d'air fournie à un dispositif de freinage pneumatique (50) lors d'un freinage d'un véhicule ferroviaire (10) ;
une étape (S14) d'obtention de valeur de pression de cylindre de frein calculée à partir de la valeur d'instruction via une commande de retour d'information de décélération ; et
une étape (S25) de détermination de la présence ou non d'une anomalie du dispositif de frein pneumatique (50) selon la valeur d'instruction et la valeur de pression de cylindre de frein.

9. Programme de détermination d'anomalie faisant exécuter à un ordinateur les étapes de :
obtention d'une valeur d'instruction d'une pression d'air fournie à un dispositif de freinage pneumatique (50) lors d'un freinage d'un véhicule ferroviaire (10) ;
obtention de valeur de pression de cylindre calculée à partir de la valeur d'instruction via une commande de retour d'information de décélération ; et
détermination de la présence ou non d'une anomalie du dispositif de frein pneumatique (50) selon la valeur d'instruction et la valeur de pression de cylindre de frein.

10. Le dispositif de commande de frein selon l'une quelconque des revendications 1 à 7, dans lequel l'unité d'obtention de valeur d'instruction (86) obtient la valeur d'instruction pour un premier dispositif de frein pneumatique, qui est un d'une pluralité de dispositifs de frein pneumatique (50), en tant que première instruction, et la valeur d'instruction pour un deuxième dispositif de frein pneumatique autre que le premier dispositif de frein pneumatique parmi la pluralité de dispositifs de frein pneumatique (50) en tant que deuxième valeur d'instruction,
dans lequel l'unité d'obtention de valeur de pression de cylindre (87) obtient la valeur de pression de cylindre de frein pour le premier dispositif de frein pneumatique en tant que première valeur de pression de cylindre de frein, et obtient la valeur de pression cylindre de frein pour le deuxième dispositif de frein pneumatique en tant que deuxième valeur de pression de cylindre de frein, et
dans lequel l'unité de détermination (83) détermine une anomalie du premier dispositif de frein pneumatique selon la première valeur d'instruction et la première valeur de pression de cylindre de frein, et détermine une anomalie du deuxième dispositif de frein pneumatique selon la deuxième valeur d'instruction et la deuxième valeur de pression de cylindre de frein, et
dans lequel le dispositif de commande de frein comprenant en outre une unité de commande (84) qui commande des minutages de frein du premier dispositif de frein pneumatique et du deuxième dispositif de frein pneumatique selon un résultat de la détermination par l'unité de détermination (83).

11. Support lisible par un ordinateur stockant un programme de détermination d'anomalie qui fait exécuter à un ordinateur les étapes de :
obtention d'une valeur d'instruction d'une pression d'air fournie à un dispositif de freinage pneumatique (50) lors d'un freinage d'un véhicule ferroviaire (10) ;
obtention d'une valeur de pression de cylindre calculée à partir de la valeur d'instruction via une commande de retour d'information de décélération ; et
détermination de la présence ou non d'une anomalie du dispositif de frein pneumatique (50) selon la valeur d'instruction et la valeur de pression de cylindre de frein.
